# EUROPEAN PATENT SPECIFICATION

(11) **EP 3 559 113 B1**
(45) Date of publication and mention of the grant of the patent: **12.06.2024**
(21) Application number: 17882691.3
(22) Date of filing: 18.12.2017
(51) Int. Cl.: C08L 23/14, C08L 23/16

(54) **MASTERBATCH COMPOSITION**
MASTERBATCHZUSAMMENSETZUNG
COMPOSITION DE MÉLANGE MAÎTRE

(30) Priority: 20.12.2016 JP 2016246290
(43) Date of publication of application: 30.10.2019
(73) Proprietor: Basell Poliolefine Italia S.r.l., 20121 Milano (IT)
(72) Inventor: YASUMOTO, Kazuhisa, Kawasaki-shi Kanagawa 210-0863 (JP); ABE, Miyuki, Kawasaki-shi Kanagawa 210-0863 (JP); NAKAJIMA, Takeshi, Kawasaki-shi Kanagawa 210-0863 (JP)
(74) Representative: LyondellBasell
(86) International application number: PCT/JP2017/046271
(87) International publication number: WO 2018/117271

(56) References cited:
- EP-A1- 1 939 251
- WO-A1-2004/087807
- WO-A1-2010/108866
- WO-A1-2010/108866
- WO-A1-2011/076553
- JP-A- 2003 301 086
- JP-A- 2015 113 363
- JP-A- 2017 136 702
- US-A1- 2014 303 310
- US-B2- 8 008 400

## Description

### Technical Field

The present invention relates to a masterbatch composition.

### Background Art

Polypropylene resin compositions are widely used for various industrial articles such as automobiles, because of their excellent characteristics. Polypropylene resin compositions are used particularly for large-size injection molding applications such as automotive bumpers, in which case they often have problems such as insufficient fluidity, or the formation of defects of surface appearance such as flow marks or seeds. In order to overcome these problems, Patent Literature 1, for example, discloses a masterbatch composition comprising polypropylene or a propylene-ethylene copolymer (component A) having a specific melt flow rate; and a propylene-ethylene copolymer (component B) of which xylene solubles have a specific intrinsic viscosity.

### Citation List

### Patent Literature

Patent Literature 1: National Publication of International Patent Application No. 2012-521461

### Summary of Invention

### Technical Problem

The present inventors preliminarily studied the method described in Patent Literature 1 to obtain the finding that the fluidity is not sufficient, although the defects of surface appearance are improved. In view of such circumstances, an object of the present invention is to provide a masterbatch composition that provides a polypropylene resin composition having good surface appearance and excellent fluidity.

### Solution to Problem

The present inventors found that the above-described object can be achieved by setting the melt flow rate of a masterbatch composition in a specific range, and setting the Mw/Mn as an index of molecular weight distribution of xylene insolubles in a specific range. In summary, the above-described object can be achieved by the present invention as set forth below.
[1] A masterbatch composition containing:
   a propylene (co)polymer as component (1) containing 0 to 3 wt% of ethylene or one or more C4-C10-α-olefin-derived units; and
   a propylene-ethylene copolymer as component (2) containing 25 to 35 wt% of ethylene-derived units,
      wherein the masterbatch composition satisfies the following requirements:
      1) the composition has a melt flow rate (230°C, load: 21.18 N) of 5 to 30 g/10 minutes;
      2) xylene insolubles of the composition have an Mw of 10 × 10⁴ to 30 × 10⁴ and an Mw/Mn of 6 to 20 as measured by GPC; and
      3) xylene solubles of the composition have an intrinsic viscosity of 5.5 to 9.0 dl/g.
   Wherein the masterbatch composition comprises 67 to 75 wt% of component (1) and 25 to 33 wt% of component (2).
[2] The masterbatch composition according to [1], wherein the melt flow rate is 5 to 15 g/10 minutes.
[3] The masterbatch composition according to [1] or [2], wherein the xylene insolubles have an Mw/Mn of 7 to 20, preferably 8 to 20, more preferably 9 to 20.
[4] The masterbatch composition according to any of [1] to [3], wherein a content of the ethylene-derived units in the propylene-ethylene copolymer as component (2) is 27 to 33 wt%.
[5] The masterbatch composition according to any of [1] to [4], wherein the xylene solubles have an intrinsic viscosity of 6.0 to 8.0 dl/g.
[6] The masterbatch composition according to any of [1] to [5] obtained by polymerizing propylene and ethylene using a catalyst containing:
   (A) a solid catalyst containing, as essential components, magnesium, titanium, halogen, and an electron donor compound selected from succinate-based compounds;
   (B) an organoaluminum compound; and
   (C) an external electron donor compound.
[7] A polypropylene resin composition obtained by mixing the masterbatch composition according to any of [1] to [6] with block polypropylene different from the masterbatch composition, the block polypropylene containing 5 wt% or more of ethylene.
[7] An injection-molded article obtained by injection-molding the polypropylene resin composition according to [7]. Advantageous Effect of Invention

A masterbatch composition that provides a polypropylene resin composition having excellent surface appearance and excellent fluidity can be provided.

### Brief Description of Drawings

[Figure 1] The principles of measuring die swell.
[Figure 2A] The results of measuring die swell of masterbatch compositions.
[Figure 2B] The results of measuring die swell of polypropylene resin compositions.
[Figure 3] The results of measuring die swell of masterbatch compositions.
[Figure 4] Evaluation criteria for flow marks.

### Description of Embodiments

As used herein, the "masterbatch composition" refers to a composition containing components (1) and (2) as essential components, and containing known additives, as required. The masterbatch composition can be used as a mixture with other resins, or can be used alone. The "polypropylene resin composition" refers to a resin composition which contains the "masterbatch composition" and block polypropylene containing 5 wt% or more of ethylene and different from the masterbatch composition, and contains, as required, a propylene (co)polymer containing 0 to 3 wt% of ethylene or one or more C4-C10-α-olefin-derived units, an elastomer, and a filler. The present invention will be hereinafter described in detail. As used herein, "X to Y" includes the end values X and Y.

### 1. Masterbatch composition

The masterbatch composition of the present invention contains the following components.
Component (1): a propylene (co)polymer containing 0 to 3 wt% of ethylene or one or more C4-C10-α-olefin-derived units
Component (2): a propylene-ethylene copolymer containing 25 to 35 wt% of ethylene-derived units

### (1) Component (1): propylene (co)polymer

The propylene (co)polymer is a propylene homopolymer, or a copolymer of propylene containing more than 0 wt% and 3 wt% or less of ethylene or a C4-C10-α-olefin (hereinafter also referred to as the "comonomer") . When rigidity and heat resistance are required in the final article, the propylene homopolymer is preferred. On the other hand, when flexibility and impact resistance are required, the copolymer is preferred. A propylene copolymer containing 1.0 wt% of ethylene-derived units is a copolymer having a ratio by weight of ethylene-derived units to propylene-derived units of 1.0:99.0. This is also the case for other copolymers. The content of comonomer-derived units has an upper limit value of 3 wt% or less, preferably 2.8 wt% or less, and more preferably 2.5 wt% or less. If the content exceeds the upper limit value, rigidity will decrease. Further, if the content is 5.0 wt% or more, production of the polymer will be difficult. While the lower limit value of the content of comonomer-derived units, if present, is not limited, it is preferably 0.5 wt% or more, and more preferably 1.0 wt% or more. The comonomer is preferably ethylene or a C4-C6-α-olefin in view of availability, and is more preferably ethylene.

### (2) Component (2): propylene-ethylene copolymer

The propylene-ethylene copolymer used in the present invention contains 25 to 35 wt% of ethylene-derived units. If the content of ethylene-derived units exceeds this range, the impact strength and tensile elongation at room temperature will decrease. Further, if the content exceeds the upper limit value, a sufficient effect of improving the impact strength and die swell cannot be obtained in the polypropylene resin composition containing the masterbatch. In view of the above, the upper limit value of the content of ethylene-derived units is preferably 33 wt% or less. The lower limit value of the content is preferably 27 wt% or more.

### (3) Composition ratio

The ratio by weight of component (1) to component (2) is (1):(2) = 67-75:25-33. If the amount of component (2) exceeds this upper limit, the production will be difficult, and if the amount of component (2) is less than the lower limit, the effect of improving the surface appearance will decrease in the polypropylene resin composition containing the masterbatch.

### (4) Other components

The masterbatch composition may further contain conventional additives commonly used in olefin polymers, such as an antioxidant, a chlorine catcher, a heat stabilizer, a light stabilizer, an ultraviolet absorber, an internal lubricant, an external lubricant, an anti-blocking agent, an antistatic agent, an anti-fogging agent, a crystal nucleating agent, a flame retardant, a dispersant, a copper inhibitor, a neutralizer, a plasticizer, an anti-foaming agent, a cross-linking agent, a peroxide, an oil extender, and other organic and inorganic pigments. The amount of each additive to be added may be a known amount.

### (5) Characteristics

### 1) Melt flow rate

The masterbatch composition has a melt flow rate (hereinafter also referred to as "MFR") of 5 to 30 g/10 minutes at 230°C and a load of 21.18 N. When the melt flow rate falls within this range, excellent fluidity can be achieved when the resulting material is formed into the polypropylene resin composition. If, however, the value of the melt flow rate exceeds the upper limit value, defects of surface appearance tend to form. Further, if the value of the melt flow rate falls below the lower limit value, fluidity will decrease to reduce the processability when the resulting material is formed into the polypropylene resin composition. Moreover, the surface appearance of the molded article may be adversely affected, as will be described below. In view of the above, the melt flow rate is preferably 5 to 15 g/10 minutes.

### 2) Mw and Mw/Mn of XI

Xylene insolubles (XI) of the composition have an Mw of 10 × 10⁴ to 30 × 10⁴ and an Mw/Mn of 6 to 20 as measured by GPC. The xylene insolubles are a crystalline component in the composition. In the present invention, the Mw is in the range of 10 × 10⁴ to 30 × 10⁴, which is relatively low, and the Mw/Mn as an index of molecular weight distribution is in the range of 6 to 20, which is wide. With such a molecular weight and a molecular weight distribution, die swell is improved by the high-molecular-weight component, and the fluidity is improved by the low-molecular-weight component. When die swell is large, the molten polymer is rapidly brought into contact with the mold at the time of molding, leading to good surface appearance. That is, the masterbatch composition of the present invention provides a polypropylene resin composition having excellent surface appearance and excellent fluidity. In view of the above, the above-described Mw is preferably 12 × 10⁴ to 28 × 10⁴. Further, the above-described Mw/Mn is preferably 7 to 20, more preferably 8 to 20, even more preferably 9 to 20. The Mw and Mw/Mn of the XI are determined by obtaining a component insoluble in xylene at 25°C, and measuring the component by GPC (gel permeation chromatography).

### 3) XSIV

The intrinsic viscosity (IV) of the xylene solubles (XS) of the composition also represents an index of the molecular weight of a component without crystallinity in the composition. The XSIV is determined by obtaining a component soluble in xylene at 25°C, and measuring the intrinsic viscosity of the component by a routine method. In the present invention, the XSIV is 5.5 to 9.0 dl/g. If the XSIV falls within this range, die swell is increased, so that good surface appearance upon molding can be achieved when the resulting material is formed into the polypropylene resin composition. In view of the above, the above-described intrinsic viscosity is preferably 6.0 to 8.0 dl/g.

### 4) Other physical properties

The masterbatch composition of the present invention preferably has a flexural modulus of 950 to 1500 MPa, and more preferably 950 to 1300 MPa.

### (6) Production method

While the masterbatch composition may be produced using any method, it is preferably obtained by a method including the step of polymerizing the raw-material monomer of component (1) and the raw-material monomer of component (2) using a catalyst containing (A) a solid catalyst containing magnesium, titanium, halogen, and a succinate-based compound as an internal electron donor; (B) an organoaluminum compound; and (C) an external electron donor compound.

### 1) Solid catalyst (component A)

Component (A) can be prepared using a known method, for example, by contacting a magnesium compound, a titanium compound, and an electron donor compound with one another.

A tetravalent titanium compound represented by the general formula: Ti(OR)_{g}X_{4-g} is suitable as the titanium compound used for the preparation of component (A). In the formula, R is a hydrocarbon group, X is halogen, and 0 ≤ g ≤ 4. More specifically, examples of such titanium compounds include titanium tetrahalides such as TiCl₄, TiBr₄, and TiI₄; alkoxytitanium trihalides such as Ti(OCH₃)Cl₃, Ti(OC₂H5)Cl₃, Ti(Oₙ-C₄H₉)Cl₃, Ti(OC₂H₅)Br₃, and Ti(OisoC₄H₉)Br₃; alkoxytitanium dihalides such as Ti(OCH₃)₂Cl₂, Ti(OC₂H₅)₂Cl₂, Ti(Oₙ-C₄H₉)₂Cl₂, and Ti(OC₂H₅)₂Br₂; trialkoxytitanium monohalides such as Ti(OCH₃)₃Cl, Ti(OC₂H₅)₃Cl, Ti(Oₙ-C₄H₉)₃Cl, and Ti(OC₂H₅)₃Br; and tetraalkoxytitanium such as Ti(OCH₃)₄, Ti(OC₂H₅)₄, and Ti(Oₙ-C₄H₉)₄. Among the above, halogen-containing titanium compounds, in particular, titanium tetrahalides, are preferred, and titanium tetrachloride is more particularly preferred.

Examples of the magnesium compound used for the preparation of component (A) include magnesium compounds with a magnesium-carbon bond or a magnesium-hydrogen bond, such as dimethylmagnesium, diethylmagnesium, dipropylmagnesium, dibutylmagnesium, diamylmagnesium, dihexylmagnesium, didecylmagnesium, ethylmagnesium chloride, propylmagnesium chloride, butylmagnesium chloride, hexylmagnesium chloride, amylmagnesium chloride, butylethoxymagnesium, ethylbutylmagnesium, and butylmagnesium hydride. These magnesium compounds can be used in the form of complex compounds with organoaluminum or the like, for example, and may be in liquid or solid form. Examples of more suitable magnesium compounds include magnesium halides such as magnesium chloride, magnesium bromide, magnesium iodide, and magnesium fluoride; alkoxymagnesium halides such as methoxymagnesium chloride, ethoxymagnesium chloride, isopropoxymagnesium chloride, butoxymagnesium chloride, and octoxymagnesium chloride; allyloxymagnesium halides such as phenoxymagnesium chloride and methylphenoxymagnesium chloride; alkoxymagnesium such as ethoxymagnesium, isopropoxymagnesium, butoxymagnesium, n-octoxymagnesium, and 2-ethylhexoxymagnesium; allyloxymagnesium such as phenoxymagnesium and dimethylphenoxymagnesium; and magnesium carboxylates such as magnesium laurate and magnesium stearate.

The electron donor compound used for the preparation of component (A) is generally referred to as an "internal electron donor." In the present invention, it is preferred to use an internal electron donor that provides a wide molecular weight distribution. While it is known that multi-stage polymerization can generally increase the molecular weight distribution, it is difficult to increase the molecular weight distribution when the XI has a low molecular weight. The use of a specific internal electron donor, however, can increase the molecular weight distribution, even though the XI has a low molecular weight. A composition obtained by polymerization using this catalyst exhibits improved fluidity and increased swell, compared to compositions having the same molecular weight distribution obtained by pellet or powder blending polymers polymerized using other catalysts, and compositions having the same molecular weight distribution obtained by multi-stage polymerization. A reason for this is considered to be as follows: in the composition produced using this catalyst, the high-molecular-weight component and the low-molecular-weight component are integrated in a state close to the molecular level, while in the latter resin compositions, these components are not mixed in a state close to the molecular level, and the compositions merely superficially show the same molecular weight distribution. It is, however, unrealistic to express this in language in the claims. Preferred internal electron donors will be hereinafter described.

Preferred internal electron donors in the present invention are succinate-based compounds. As used herein, the "succinate-based compounds" refers to diesters of succinic acid or diesters of substituted succinic acid. The succinate-based compounds will be hereinafter described in detail. The succinate-based compounds preferably used in the present invention are represented by formula (I): 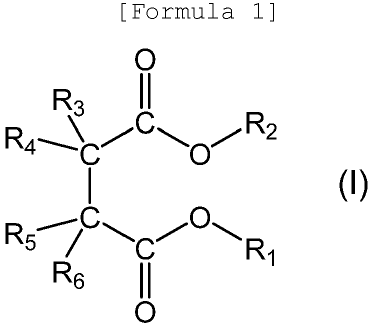 wherein R₁ and R₂ groups are the same as or different from each other, and are each a C₁-C₂₀ straight or branched alkyl, alkenyl, cycloalkyl, aryl, arylalkyl, or alkylaryl group optionally containing heteroatoms; and R₃ to R₆ groups are the same as or different from each other, and are each a C₁-C₂₀ straight or branched alkyl, alkenyl, cycloalkyl, aryl, arylalkyl, or alkylaryl group containing hydrogen or optionally containing heteroatoms, and R₃ to R₆ groups attached to the same or different carbon atoms may be taken together to form a ring.

R₁ and R₂ are preferably C₁-C₈ alkyl, cycloalkyl, aryl, arylalkyl, and alkylaryl groups. Particularly preferred are compounds wherein R₁ and R₂ are selected from primary alkyls, in particular, branched primary alkyls. Suitable examples of R₁ and R₂ groups include C₁-C₈ alkyl groups, such as methyl, ethyl, n-propyl, n-butyl, isobutyl, neopentyl, and 2-ethylhexyl. Ethyl, isobutyl, and neopentyl are particularly preferred.

One of preferred groups of the compounds represented by formula (I) is that wherein R₃ to R₅ are hydrogen, and R₆ is a branched alkyl, cycloalkyl, aryl, arylalkyl, or alkylaryl group with 3 to 10 carbon atoms. Preferred specific examples of these monosubstituted succinate compounds include diethyl-sec-butyl succinate, diethyl thexylsuccinate, diethyl cyclopropylsuccinate, diethyl norbornylsuccinate, diethyl perihydrosuccinate, diethyl trimethylsilylsuccinate, diethyl methoxysuccinate, diethyl-p-methoxyphenylsuccinate, diethyl-p-chlorophenylsuccinate, diethyl phenylsuccinate, diethyl cyclohexylsuccinate, diethyl benzylsuccinate, diethyl cyclohexylmethylsuccinate, diethyl-t-butylsuccinate, diethyl isobutylsuccinate, diethyl isopropylsuccinate, diethyl neopentylsuccinate, diethyl isopentylsuccinate, diethyl (1-trifluoromethylethyl)succinate, diethyl fluorenylsuccinate, 1-ethoxycarbo diisobutyl phenylsuccinate, diisobutyl-sec-butylsuccinate, diisobutyl thexylsuccinate, diisobutyl cyclopropylsuccinate, diisobutyl norbornylsuccinate, diisobutyl perihydrosuccinate, diisobutyl trimethylsilylsuccinate, diisobutyl methoxysuccinate, diisobutyl-p-methoxyphenylsuccinate, diisobutyl-p-chlorophenylsuccinate, diisobutyl cyclohexylsuccinate, diisobutyl benzylsuccinate, diisobutyl cyclohexylmethylsuccinate, diisobutyl-t-butylsuccinate, diisobutyl isobutylsuccinate, diisobutyl isopropylsuccinate, diisobutyl neopentylsuccinate, diisobutyl isopentylsuccinate, diisobutyl (1-trifluoromethylethyl)succinate, diisobutyl fluorenylsuccinate, dineopentyl-sec-butyl-succinate, dineopentyl thexylsuccinate, dineopentyl cyclopropylsuccinate, dineopentyl norbornylsuccinate, dineopentyl perihydrosuccinate, dineopentyl trimethylsilylsuccinate, dineopentyl methoxysuccinate, dineopentyl-p-methoxyphenylsuccinate, dineopentyl-p-chlorophenylsuccinate, dineopentyl phenylsuccinate, dineopentyl cyclohexylsuccinate, dineopentyl benzylsuccinate, dineopentyl cyclohexylmethylsuccinate, dineopentyl-t-butylsuccinate, dineopentyl isobutylsuccinate, dineopentyl isopropylsuccinate, dineopentyl neopentylsuccinate, dineopentyl isopentylsuccinate, dineopentyl (1-trifluoromethylethyl)succinate, and dineopentyl fluorenylsuccinate.

Another preferred group of compounds within the range of formula (I) is those wherein at least two groups from R₃ to R₆ are different from hydrogen, and are selected from C₁-C₂₀ linear or branched alkyl, alkenyl, cycloalkyl, aryl, arylalkyl, and alkylaryl groups optionally containing heteroatoms. Particularly preferred are compounds wherein the two groups different from hydrogen are attached to the same carbon atom. Specifically, such compounds are those wherein R₃ and R₄ are groups different from hydrogen, and R₅ and R₆ are hydrogen atoms. Preferred specific examples of these disubstituted succinates include diethyl-2,2-dimethylsuccinate, diethyl-2-ethyl-2-methylsuccinate, diethyl-2-benzyl-2-isopropylsuccinate, diethyl-2-cyclohexylmethyl-2-isobutylsuccinate, diethyl-2-cyclopentyl-2-n-butylsuccinate, diethyl-2,2-diisobutylsuccinate, diethyl-2-cyclohexyl-2-ethylsuccinate, diethyl-2-isopropyl-2-methylsuccinate, diethyl-2-tetradecyl-2-ethylsuccinate, diethyl-2-isobutyl-2-ethylsuccinate, diethyl-2-(1-trifluoromethylethyl)-2-methylsuccinate, diethyl-2-isopentyl-2-isobutylsuccinate, diethyl-2-phenyl-2-n-butylsuccinate, diisobutyl-2,2-dimethylsuccinate, diisobutyl-2-ethyl-2-methylsuccinate, diisobutyl-2-benzyl-2-isopropylsuccinate, diisobutyl-2-cyclohexylmethyl-2-isobutylsuccinate, diisobutyl-2-cyclopentyl-2-n-butylsuccinate, diisobutyl-2,2-diisobutylsuccinate, diisobutyl-2-cyclohexyl-2-ethylsuccinate, diisobutyl-2-isopropyl-2-methylsuccinate, diisobutyl-2-tetradecyl-2-ethylsuccinate, diisobutyl-2-isobutyl-2-ethylsuccinate, diisobutyl-2-(1-trifluoromethylethyl)-2-methylsuccinate, diisobutyl-2-isopentyl-2-isobutylsuccinate, diisobutyl-2-phenyl-2-n-butylsuccinate, dineopentyl-2,2-dimethylsuccinate, dineopentyl-2-ethyl-2-methylsuccinate, dineopentyl-2-benzyl-2-isopropylsuccinate, dineopentyl-2-cyclohexylmethyl-2-isobutylsuccinate, dineopentyl-2-cyclopentyl-2-n-butylsuccinate, dineopentyl-2,2-diisobutylsuccinate, dineopentyl-2-cyclohexyl-2-ethylsuccinate, dineopentyl-2-isopropyl-2-methylsuccinate, dineopentyl-2-tetradecyl-2-ethylsuccinate, dineopentyl-2-isobutyl-2-ethylsuccinate, dineopentyl-2-(1-trifluoromethylethyl)-2-methylsuccinate, dineopentyl-2-isopentyl-2-isobutylsuccinate, and dineopentyl-2-phenyl-2-n-butylsuccinate.

Also particularly preferred are compounds wherein at least two groups different from hydrogen are attached to different carbon atoms. Specifically, such compounds are those wherein R₃ and R₅ are groups different from hydrogen. In this case, while R₄ and R₆ may be hydrogen atoms or groups different from hydrogen, it is preferred that one of them be a hydrogen atom (trisubstituted succinates). Preferred specific examples of these compounds include diethyl-2,3-bis(trimethylsilyl)succinate, diethyl-2,2-sec-butyl-3-methylsuccinate, diethyl-2-(3,3,3-trifluoropropyl)-3-methylsuccinate, diethyl-2,3-bis(2-ethylbutyl)succinate, diethyl-2,3-diethyl-2-isopropylsuccinate, diethyl-2,3-diisopropyl-2-methylsuccinate, diethyl-2,3-dicyclohexyl-2-methyldiethyl-2,3-dibenzylsuccinate, diethyl-2,3-diisopropylsuccinate, diethyl-2,3-bis(cyclohexylmethyl)succinate, diethyl-2,3-di-t-butylsuccinate, diethyl-2,3-diisobutylsuccinate, diethyl-2,3-dineopentylsuccinate, diethyl-2,3-diisopentylsuccinate, diethyl-2,3-(1-trifluoromethylethyl)succinate, diethyl-2,3-tetradecylsuccinate, diethyl-2,3-fluorenylsuccinate, diethyl-2-isopropyl-3-isobutylsuccinate, diethyl-2-tert-butyl-3-isopropylsuccinate, diethyl-2-isopropyl-3-cyclohexylsuccinate, diethyl-2-isopentyl-3-cyclohexylsuccinate, diethyl-2-tetradecyl-3-cyclohexylmethylsuccinate, diethyl-2-cyclohexyl-3-cyclopentylsuccinate, diisobutyl-2,3-diethyl-2-isopropylsuccinate, diisobutyl-2,3-diisopropyl-2-methylsuccinate, diisobutyl-2,3-dicyclohexyl-2-methylsuccinate, diisobutyl-2,3-dibenzylsuccinate, diisobutyl-2,3-diisopropylsuccinate, diisobutyl-2,3-bis(cyclohexylmethyl)succinate, diisobutyl-2,3-di-t-butylsuccinate, diisobutyl-2,3-diisobutylsuccinate, diisobutyl-2,3-dineopentylsuccinate, diisobutyl-2,3-diisopentylsuccinate, diisobutyl-2,3-(1-trifluoromethylethyl)succinate, diisobutyl-2,3-tetradecylsuccinate, diisobutyl-2,3-fluorenylsuccinate, diisobutyl-2-isopropyl-3-isobutylsuccinate, diisobutyl-2-tert-butyl-3-isopropylsuccinate, diisobutyl-2-isopropyl-3-cyclohexylsuccinate, diisobutyl-2-isopentyl-3-cyclohexylsuccinate, diisobutyl-2-tetradecyl-3-cyclohexylmethylsuccinate, diisobutyl-2-cyclohexyl-3-cyclopentylsuccinate, dineopentyl-2,3-bis(trimethylsilyl)succinate, dineopentyl-2,2-sec-butyl-3-methylsuccinate, dineopentyl-2-(3,3,3-trifluoropropyl)-3-methylsuccinate, dineopentyl-2,3-bis(2-ethylbutyl)succinate, dineopentyl-2,3-diethyl-2-isopropylsuccinate, dineopentyl-2,3-diisopropyl-2-methylsuccinate, dineopentyl-2,3-dicyclohexyl-2-methylsuccinate, dineopentyl-2,3-dibenzylsuccinate, dineopentyl-2,3-diisopropylsuccinate, dineopentyl-2,3-bis(cyclohexylmethyl)succinate, dineopentyl-2,3-di-t-butylsuccinate, dineopentyl-2,3-diisobutylsuccinate, dineopentyl-2,3-dineopentylsuccinate, dineopentyl-2,3-diisopentylsuccinate, dineopentyl-2,3-(1-trifluoromethylethyl)succinate, dineopentyl-2,3-tetradecylsuccinate, dineopentyl-2,3-fluorenylsuccinate, dineopentyl-2-isopropyl-3-isobutylsuccinate, dineopentyl-2-tert-butyl-3-isopropylsuccinate, dineopentyl-2-isopropyl-3-cyclohexylsuccinate, dineopentyl-2-isopentyl-3-cyclohexylsuccinate, dineopentyl-2-tetradecyl-3-cyclohexylmethylsuccinate, and dineopentyl-2-cyclohexyl-3-cyclopentylsuccinate.

Among the compounds of formula (I), compounds wherein some of R₃ to R₆ groups are taken together to form a ring can also be preferably used. Examples of these compounds include those described in National Publication of International Patent Application No. 2002-542347, such as 1-(ethoxycarbonyl)-1-(ethoxyacetyl)-2,6-dimethylcyclohexane, 1-(ethoxycarbonyl)-1-(ethoxyacetyl)-2,5-dimethylcyclopentane, 1-(ethoxycarbonyl)-1-(ethoxyacetylmethyl)-2-methylcyclohexane, and 1-(ethoxycarbonyl)-1-(ethoxy(cyclohexyl)acetyl)cyclohexane. Additionally, cyclic succinate compounds as disclosed in International Publication No. WO2009/069483 such as diisobutyl 3,6-dimethylcyclohexane-1,2-dicarboxylate and diisobutyl cyclohexane-1,2-dicarboxylate can also be suitably used. Preferred examples of other cyclic succinate compounds also include compounds disclosed in International Publication No. WO2009/057747.

Among the compounds of formula (I), when R₃ to R₆ groups contain heteroatoms, the heteroatoms are preferably atoms of group 15 including nitrogen and phosphorus atoms or atoms of group 16 including oxygen and sulfur atoms. Examples of compounds wherein R₃ to R₆ groups contain atoms of group 15 include compounds disclosed in Japanese Patent Laid-Open No. 2005-306910. On the other hand, examples of compounds wherein R₃ to R₆ groups contain atoms of group 16 include compounds disclosed in Japanese Patent Laid-Open No. 2004-131537.

Other internal electron donors that provide a molecular weight distribution equivalent to that obtained with the succinate-based compounds may also be used. Examples of these internal electron donors include biphenyldicarboxylic acid esters described in Japanese Patent Laid-Open No. 2013-28704, cyclohexene dicarboxylic acid esters described in Japanese Patent Laid-Open No. 2014-201602, dicycloalkyl dicarboxylic acid esters described in Japanese Patent Laid-Open No. 2013-28705, diol dibenzoate described in Japanese Patent No. 4959920, and 1,2-phenylene dibenzoate described in International Publication No. WO2010/078494.

### 2) Organoaluminum compound (component B)

Examples of organoaluminum compounds as components (B) include the following:
trialkylaluminum such as triethylaluminum and tributylaluminum;
trialkenylaluminum such as triisoprenylaluminum;
dialkylaluminum alkoxides such as diethylaluminum ethoxide and dibutylaluminum butoxide;
alkylaluminum sesquialkoxides such as ethylaluminum sesquiethoxide and butylaluminum sesquibutoxide;
partially halogenated alkylaluminum, for example, alkylaluminum dihalogenides such as ethylaluminum dichloride, propylaluminum dichloride, and butylaluminum dibromide;
dialkylaluminum hydrides such as diethylaluminum hydride and dibutylaluminum hydride;
partially hydrogenated alkylaluminum, for example, alkylaluminum dihydrides such as ethylaluminum dihydride and propylaluminum dihydride; and
partially alkoxylated and halogenated alkylaluminum such as ethylaluminum ethoxychloride, butylaluminum butoxychloride, and ethylaluminum ethoxybromide.

### 3) Electron donor compound (component C)

The electron donor compound as component (C) is generally referred to as an "external electron donor." An organosilicon compound is preferred as such an electron donor compound. Examples of preferred organosilicon compounds include the following:
trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p-tolyldimethoxysilane, bis-p-tolyldiethoxysilane, bis-ethylphenyldimethoxysilane, dicyclopentyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, γ-chloropropyltrimethoxysilane, methyltriethoxysilane, ethyltriethoxysilane, vinyltriethoxysilane, t-butyltriethoxysilane, thexyltrimethoxysilane, n-butyltriethoxysilane, isobutyltriethoxysilane, phenyltriethoxysilane, γ-aminopropyltriethoxysilane, chlorotriethoxysilane, ethyltriisopropoxysilane, vinyltributoxysilane, cyclohexyltrimethoxysilane, cyclohexyltriethoxysilane, 2-norbornanetrimethoxysilane, 2-norbornanetriethoxysilane, 2-norbornanemethyldimethoxysilane, ethyl silicate, butyl silicate, trimethylphenoxysilane, methyltriallyloxysilane, vinyltris(β-methoxyethoxysilane), vinyltriacetoxysilane, and dimethyltetraethoxydisiloxane.

Preferred among the above are ethyltriethoxysilane, n-propyltriethoxysilane, n-propyltrimethoxysilane, t-butyltriethoxysilane, t-butylmethyldimethoxysilane, t-butylmethyldiethoxysilane, t-butylethyldimethoxysilane, t-butylpropyldimethoxysilane, t-butyl-t-butoxydimethoxysilane, t-butyltrimethoxysilane, i-butyltrimethoxysilane, isobutylmethyldimethoxysilane, i-butyl-sec-butyldimethoxysilane, ethyl(perhydroisoquinolin-2-yl)dimethoxysilane, bis(decahydroisoquinolin-2-yl)dimethoxysilane, tri(isopropenyloxy)phenylsilane, thexyltrimethoxysilane, vinyltriethoxysilane, phenyltriethoxysilane, phenyltrimethoxysilane, vinyltributoxysilane, diphenyldimethoxysilane, diisopropyldimethoxysilane, diisobutyldimethoxysilane, i-butyl-i-propyldimethoxysilane, cyclopentyl-t-butoxydimethoxysilane, dicyclopentyldimethoxysilane, cyclohexylmethyldimethoxysilane, cyclohexyl-i-butyldimethoxysilane, cyclopentyl-i-butyldimethoxysilane, cyclopentylisopropyldimethoxysilane, di-sec-butyldimethoxysilane, diethylaminotriethoxysilane, tetraethoxysilane, tetramethoxysilane, isobutyltriethoxysilane, phenylmethyldimethoxysilane, phenyltriethoxysilane, bis-p-tolyldimethoxysilane, p-tolylmethyldimethoxysilane, dicyclohexyldimethoxysilane, cyclohexylethyldimethoxysilane, 2-norbornanetriethoxysilane, 2-norbornanemethyldimethoxysilane, diphenyldiethoxysilane, methyl(3,3,3-trifluoropropyl)dimethoxysilane, ethyl silicate, and the like.

### 4) Polymerization

The raw-material monomers are polymerized by contacting them with the catalyst prepared as described above. Here, it is preferred to initially perform pre-polymerization using the above-described catalyst. Pre-polymerization is a step of forming the polymer chain, which will be the scaffold of subsequent permanent polymerization of the raw-material monomers, on the solid catalyst component. Pre-polymerization can be performed using a known method. Pre-polymerization is generally performed at 40°C or lower, preferably 30°C or lower, and more preferably 20°C or lower.

Next, the preliminarily polymerized catalyst is introduced into the polymerization reaction system to permanently polymerize the raw-material monomers. Permanent polymerization is preferably performed by polymerizing the raw-material monomer of component (1) and the raw-material monomer of component (2), using two or more reactors. Polymerization may be carried out in the liquid phase, gas phase, or liquid-gas phase. The polymerization temperature is preferably from normal temperature to 150°C, and more preferably 40°C to 100°C. The polymerization pressure preferably ranges from 33 to 45 bar for polymerization in the liquid phase, and preferably ranges from 5 to 30 bar for polymerization in the gas phase. A conventional molecular weight regulator known in the pertinent art, such as a chain transfer agent (for example, hydrogen or ZnEt₂), may be used.

Moreover, a polymerization apparatus having a gradient in monomer concentration or polymerization conditions may be used. In such a polymerization apparatus, the monomers can be polymerized in the gas phase using, for example, an apparatus having at least two interconnected polymerization zones. Specifically, in the presence of a catalyst, the monomers are fed to a polymerization zone constituted by a riser and polymerized, and the monomers are fed to a downcomer connected to the riser and polymerized, and then the polymer product is collected while being circulated between the riser and downcomer. This method includes a means for totally or partially preventing the gas mixture present in the riser from entering the downcomer. Further, a gas and/or liquid mixture of a composition different from that of the gas mixture present in the riser is introduced into the downcomer. The method described in National Publication of International Patent Application No. 2002-520426, for example, can be adopted as the above-described polymerization method.

### 2. Polypropylene resin composition

The polypropylene resin composition of the present invention is obtained by mixing the above-described masterbatch composition with block polypropylene containing 5 wt% or more of ethylene and different from the masterbatch composition (hereinafter also referred to as "essential block polypropylene" for convenience sake). The polypropylene resin composition of the present invention may also contain the optional components described below, as required.

### (1) Essential block polypropylene

An example of the essential block polypropylene may be a polymeric mixture (also referred to as an HECO, hetero-phasic copolymer) obtained by polymerizing ethylene and one or more C3-C10-α-olefins in the presence of a propylene polymer. The masterbatch composition of the present invention is also a kind of HECO, and the essential block polypropylene can also be produced using a method similar to that of the masterbatch composition. The masterbatch composition and the essential block polypropylene, however, differ in composition.

### (2) Optional components

### 1) Optional propylene (co)polymer

An example of an optional component may be a polymer containing 0 to 3 wt% of ethylene or one or more C4-C10-α-olefins (also referred to as the "optional propylene (co)polymer" for convenience sake). The optional propylene (co)polymer may be the same as or different from component (1) described above. In view of the rigidity and heat resistance of articles, homopolypropylene is preferred as the optional propylene (co)polymer.

### 2) Elastomer

An elastomer is a polymer with elasticity, and is added mainly for the purpose of improving the impact resistance of a material. An example of the elastomer used in the present invention may be a copolymer of ethylene and an α-olefin. Examples of α-olefins include α-olefins with 3 to 12 carbon atoms, and specifically, propylene, 1-butene, 1-pentene, 1-hexene, 1-octene, and the like are preferred. The elastomer preferably has a density lower than the densities of the polymers of components (1) and (2). While the density of the elastomer is not limited, it is preferably 0.850 to 0.890 g/cm³, and more preferably 0.860 to 0.880 g/cm³, for example. Such an elastomer can be prepared by polymerizing the monomers using a homogeneous catalyst such as metallocene or half-metallocene, as described in Japanese Patent Laid-Open No. 2015-113363, for example. The elastomer preferably has an MFR of 0.1 to 50 g/10 minutes at 190°C and a load of 21.6 N.

### 3) Filler

A filler is added mainly for the purpose of improving the rigidity of a material. Examples of fillers include inorganic fillers such as talc, clay, calcium carbonate, magnesium hydroxide, and glass fiber; and organic fillers such as carbon fiber and cellulose fiber. In order to improve the dispersibility of these fillers, as required, the filler may be surface-treated, or a masterbatch of the filler with a resin may be prepared. Among the fillers, talc is preferred because it is readily miscible with the propylene (co)polymer and the copolymer of ethylene and an α-olefin, so as to readily improve the rigidity of the molded article.

### 4) Other components

The polypropylene resin composition of the present invention may further contain conventional additives commonly used in olefin polymers, such as an antioxidant, a chlorine catcher, a heat stabilizer, a light stabilizer, an ultraviolet absorber, an internal lubricant, an external lubricant, an anti-blocking agent, an anti-static agent, an anti-fogging agent, a crystal nucleating agent, a flame retardant, a dispersant, a copper inhibitor, a neutralizer, a plasticizer, an anti-foaming agent, a cross-linking agent, a peroxide, an oil extender, and other organic and inorganic pigments. The amount of each additive to be added may be a known amount.

### (3) Composition ratio

The ratio by weight of the masterbatch composition to the essential block polypropylene to be blended is preferably "2-70":"98-30." The amounts of the optional components to be blended are preferably such that the amount of the optional propylene (co)polymer is 0 to 100 parts by weight, the amount of the elastomer is 0 to 100 parts by weight, and the amount of the filler is 0 to 100 parts by weight, based on a total amount of 100 parts by weight of the masterbatch composition and the essential block polypropylene.

### (4) Production method

The polypropylene resin composition of the present invention can be produced by melt-kneading the above-described components. While the kneading method is not limited, a method using a kneader such as an extruder is preferred. While the kneading conditions are not particularly limited, it is preferred to set the cylinder temperature to 180 to 250°C. The polypropylene resin composition thus obtained is preferably in the form of pellets. Alternatively, the polypropylene resin composition can be produced as a molded article, by weighing a dry blend of the above-described components into an injection molding machine, and kneading them in a melt-kneading part (cylinder). In this manner, the polypropylene resin composition of the present invention is obtained by mixing the masterbatch composition with the other components. The propylene-ethylene copolymer component of the masterbatch composition is dispersed in a matrix containing the propylene (co)polymer as a main component to form the phase structure, whereby the effects of the present invention can be achieved. It is, however, difficult to specify the phase structure because the masterbatch composition and the essential block polypropylene constituting the matrix are both HECOs.

### (5) Injection molding

The polypropylene resin composition of the present invention is suitable for injection molding. The polypropylene resin composition of the present invention has excellent fluidity, and is resistant to the formation of defects of surface appearance, which makes it suitable for large-size molded articles such as automotive parts and home appliance products. While it has been difficult to achieve both high fluidity and good surface appearance in conventional polypropylene resin compositions, the polypropylene resin composition of the present invention possesses both characteristics. General injection conditions are as follows: a cylinder temperature of 200 to 230°C, a mold temperature of 20 to 50°C, and an injection speed of 30 to 50 mm/second. Examples

### 1. Production of masterbatch compositions (No. 1)

### [Example A1] Production of masterbatch composition M1

A solid catalyst component was prepared based on the Examples of National Publication of International Patent Application No. 2011-500907. Specifically, the solid catalyst component was prepared as follows.

In a 500 mL four-neck round bottom flask purged with nitrogen, 250 mL of TiCl₄ was introduced at 0°C. Under stirring, 10.0 g of MgCl₂·1.8C₂H₅OH as microspheres (produced in accordance with the method described in Example 2 of U.S. Patent No. 4,399,054; however, the operation was performed at 3000 rpm instead of 10000 rpm) and 9.1 millimoles of diethyl-2,3-(diisopropyl)succinate were added. The temperature was elevated to 100°C and maintained for 120 minutes. Next, stirring was stopped, the solid product was allowed to settle, and the supernatant liquid was siphoned off. Then, the following operations were repeated twice: 250 mL of fresh TiCl₄ was added, the mixture was reacted at 120°C for 60 minutes, and the supernatant liquid was siphoned off. The solid was washed six times with anhydrous hexane (6 × 100 mL) at 60°C.

The above-described solid catalyst was contacted with triethylaluminum (TEAL) and dicyclopentyldimethoxysilane (DCPMS) at room temperature for 5 minutes, in amounts such that the ratio by weight of TEAL to the solid catalyst became 18, and the TEAL/DCPMS ratio by weight became 10. Pre-polymerization was performed by maintaining the resulting catalyst system in liquid propylene in a suspended state at 20°C for 5 minutes.

The resulting pre-polymer was introduced into a first-stage polymerization reactor to obtain a propylene homopolymer, and thereafter, the resulting polymer was purged of unreacted monomers, and then introduced into a second-stage polymerization reactor to polymerize a copolymer (ethylene-propylene copolymer). During polymerization, the temperature and pressure were adjusted, and hydrogen was used as a molecular weight regulator. The polymerization temperature and the ratio of the reactants were as follows: in the first-stage reactor, the polymerization temperature was 70°C, and the hydrogen concentration was 0.82 mol%; in the second-stage reactor, the polymerization temperature was 80°C, the hydrogen concentration was 100 molar ppm, and C2/(C2 + C3) was 0.22 by molar ratio. Further, the residence time distribution in the first and second stages was adjusted such that the amount of the copolymer component became 28 wt%.

Powder of masterbatch composition M1 thus produced was blended with 0.2 wt% of B225 from BASF SE as an antioxidant and 0.05 wt% of calcium stearate from Tannan Kagaku Kogyo Co., Ltd. as a neutralizer, stirred and mixed in a Henschel mixer for 1 minute, and thereafter, the mixture was melt-kneaded at a cylinder temperature of 200°C and extruded, using a single-screw extruder having a screw diameter of 50 mm (model number: NVC-50 from Nakatani Kikai Co., Ltd.). The strands were cooled in water and then cut with a pelletizer to obtain pellets. Next, the pellets were injection-molded into various specimens, using an injection molding machine (model number: Roboshot S-2000i 100B from Fanuc Corporation). The molding conditions were as follows: a cylinder temperature of 200°C, a mold temperature of 40°C, and an injection speed of 200 mm/second. Various physical properties were evaluated using the specimens. The evaluation methods will be described below.

### [Example A2] Production of masterbatch composition M2

The masterbatch composition was produced as in Example A1, except that the hydrogen concentration in the first-stage reactor was changed to 0.84 mol%, and the residence time distribution in the first and second stages was adjusted such that the amount of the copolymer component became 31 wt%, and the masterbatch composition was evaluated.

### [Example A3] Production of masterbatch composition M3

Masterbatch composition M3 was produced as in Example A1, except that the hydrogen concentration in the first-stage reactor was changed to 0.87 mol%, C2/(C2 + C3) in the second-stage reactor was changed to 0.23 by molar ratio, and the residence time distribution in the first and second stages was adjusted such that the amount of the copolymer component became 32 wt%, and the masterbatch composition was evaluated.

### [Comparative Example A1] Production of comparative masterbatch compositions R1, XL-1, XL-2, and XL-3

R1 was produced as in Example A1, except that the hydrogen concentration in the first-stage reactor was changed to 0.24 mol%, the hydrogen concentration and C2/(C2 + C3) in the second-stage reactor were changed to 150 molar ppm and 0.27 by molar ratio, respectively, and the residence time distribution in the first and second stages was adjusted such that the amount of the copolymer component became 30 wt%, and the masterbatch composition was evaluated.

XL-1 was produced as in Example A1, except that the hydrogen concentration in the first-stage reactor was changed to 0.51 mol%, the hydrogen concentration and C2/(C2 + C3) in the second-stage reactor were changed to 50 molar ppm and 0.50 by molar ratio, respectively, and the residence time distribution in the first and second stages was adjusted such that the amount of the copolymer component became 30 wt%, and the masterbatch composition was evaluated.

XL-2 was produced as in Example A1, except that the hydrogen concentration in the first-stage reactor was changed to 0.59 mol%, the hydrogen concentration and C2/(C2 + C3) in the second-stage reactor were changed to 50 molar ppm and 0.49 by molar ratio, respectively, and the residence time distribution in the first and second stages was adjusted such that the amount of the copolymer component became 30 wt%, and the masterbatch composition was evaluated.

XL-3 was produced as in Example A1, except that the hydrogen concentration in the first-stage reactor was changed to 0.81 mol%, the hydrogen concentration and C2/(C2 + C3) in the second-stage reactor were changed to 0 molar ppm and 0.48 by molar ratio, respectively, and the residence time distribution in the first and second stages was adjusted such that the amount of the copolymer component became 30 wt%, and the masterbatch composition was evaluated.

### 2. Production of polypropylene resin compositions (No. 1)

### [1] Propylene homopolymer HOMO1

A propylene homopolymer having an MFR of 1750 g/10 minutes and a content of xylene solubles at 25°C of 2.3 wt% was used.

### [2] Propylene homopolymer HOMO2

A propylene homopolymer having an MFR of 70 g/10 minutes and a content of xylene solubles at 25°C of 1.5 wt% was used.

### [3] Block polypropylene HECOL

Block polypropylene composed of a polypropylene homopolymer and an ethylene-propylene copolymer was prepared based on the stepwise polymerization method described in paragraph 0035 of Japanese Patent Laid-Open No. 2015-113363. The block polypropylene had the following characteristics:
The polypropylene homopolymer: MFR = 210 g/10 minutes; content of xylene solubles at 25°C = 2.0 wt%
The block polypropylene: MFR = 37 g/10 minutes; intrinsic viscosity of xylene solubles at 25°C = 2.4 dl/g
The proportion of the ethylene-propylene copolymer contained in the block polypropylene = 30 wt%
The proportion of ethylene units contained in the ethylene-propylene copolymer = 27.5 wt%

### [4] Block polypropylene HECO2

Block polypropylene composed of a polypropylene homopolymer and an ethylene-propylene copolymer was prepared based on the stepwise polymerization method described in paragraph 0035 of Japanese Patent Laid-Open No. 2015-113363. The block polypropylene had the following characteristics:
The polypropylene homopolymer: MFR = 120 g/10 minutes; content of xylene solubles at 25°C = 1.9 wt%
The block polypropylene: MFR = 25 g/10 minutes; intrinsic viscosity of xylene solubles at 25°C = 2.4 dl/g
The proportion of an ethylene-1-butene copolymer contained in the block polypropylene = 27 wt%
The proportion of ethylene units contained in the ethylene-1-butene copolymer = 75 wt%

### [5] Elastomers C2C8-1 and C2C8-2

Two ethylene-octene copolymers polymerized using a metallocene-based catalyst were used.

C2C8-1 (multiblock copolymer): density = 0.870 g/cm³; MFR at 190°C and a load of 21.6 N = 0.5 g/10 minutes

C2C8-2: density = 0.870 g/cm³; MFR at 190°C and a load of 21.6 N = 1 g/10 minutes

### [Example A4] Production of a polypropylene resin composition

Masterbatch composition M2 obtained in Example A2, the above-described HOMO1, HOMO2, HECO1, HECO2, elastomers C2C8-1 and C2C8-2, and talc (HTP05L from IMI Fabi, LLC) were blended according to the composition shown in Table 2, the mixture was further blended with the following amounts of additives based on a total amount of 100 parts by weight of the resin, and the blend of these components was melt-kneaded at a die set temperature of 220°C, using a twin-screw extruder (model number: TEX30α from the Japan Steel Works, Ltd.) to obtain pellets.

### [Additives]

Antioxidant: 0.2 parts by weight of pentaerythritol tetrakis[3-(3,5-di-tert-butyl-4-hydroxyphenyl)propionate]

Weathering agent: 0.2 parts by weight of bis(1,2,2,6,6-tetramethyl-4-piperidyl) sebacate

Slip agent: 0.1 parts by weight of magnesium stearate

The pellets were injection-molded into various specimens, using an injection molding machine (model number: Roboshot S-2000i 100B from Fanuc Corporation). The molding conditions were as follows: a cylinder temperature of 200°C, a mold temperature of 40°C, and an injection speed of 200 mm/second. Various physical properties were evaluated using the specimens. The evaluation methods will be described below.

### [Example A5] Production of a polypropylene resin composition

A polypropylene resin composition was produced as in Example A4, except that masterbatch composition M3 was used instead of masterbatch composition M2, and the amounts of HOMO1 and HOMO2 to be blended were changed as shown in Table 2, and the polypropylene resin composition was evaluated.

### [Comparative Example A2] Production of a comparative polypropylene resin composition

A comparative polypropylene resin composition was produced as in Example A4, except that masterbatch composition R1 produced in Comparative Example A1 was used instead of masterbatch composition M2, and the amounts of HOMO1 and HOMO2 to be blended were changed as shown in Table 2, and the polypropylene resin composition was evaluated.

### [Comparative Example A3] Production of a comparative polypropylene resin composition

Comparative masterbatch composition XL-1 was prepared. XL-1 was a masterbatch composition composed of a propylene homopolymer as component (1) and a propylene-ethylene copolymer component as component (2), and outside the range of masterbatch compositions of the invention of the present application in that the content of ethylene-derived units in component (2) exceeded 35 wt%, and the MFR was less than 5 g/10 minutes. XL-1, the propylene (co)polymers described in [1] to [4] above, the elastomers, and talc were blended according to the composition shown in Table 2, and the comparative polypropylene resin composition was produced as in Example A4 and evaluated.

### [Comparative Example A4] Production of a comparative polypropylene resin composition

A comparative polypropylene resin composition was produced as in Comparative Example A3, except that comparative masterbatch composition XL-2 was used instead of XL-1, and the polypropylene resin composition was evaluated. XL-2 was a masterbatch composition composed of a propylene homopolymer as component (1) and a propylene-ethylene copolymer component as component (2), and outside the range of masterbatch compositions of the invention of the present application in that the content of ethylene-derived units in component (2) exceeded 35 wt%.

### [Comparative Example A5] Production of a comparative polypropylene resin composition

A comparative polypropylene resin composition was produced as in Comparative Example A3, except that comparative masterbatch composition XL-3 was used instead of XL-1, and the polypropylene resin composition was evaluated. XL-3 was a masterbatch composition composed of a propylene homopolymer as component (1) and a propylene-ethylene copolymer component as component (2), and outside the range of masterbatch compositions of the invention of the present application in that the content of ethylene-derived units in component (2) exceeded 35 wt%.

**[Table 1]**

| Table 1 Composition and Physical Properties of Masterbatch Composition | | | | | | | | | | |
|---|---|---|---|---|---|---|---|---|---|---|
| | | | | Example A1 | Example A2 | Example A3 | Comparative Example A1 | | | |
| Name of Masterbatch Composition | | | | M1 | M2 | M3 | R1 | XL-1 | XL-2 | XL-3 |
| Composition | Component (1) | | wt% | 72.3 | 69.0 | 68.0 | 70.0 | 70.0 | 70.0 | 70.0 |
| | Component (2) | | wt% | 27.7 | 31.0 | 32.0 | 30.0 | 30.0 | 30.0 | 30.0 |
| | Et Units in Component (2) | | wt% | 27.4 | 27.1 | 28.2 | 32.0 | 54.9 | 54.0 | 53.3 |
| Physical Properties | Matrix (Component (1)) | MFR | g/10 min | 105 | 115 | 117 | 9.0 | 36.3 | 56.4 | 99 |
| | Composition | MFR | g/10 min | 11 | 10 | 9.0 | 1.0 | 3.6 | 5.8 | 6.7 |
| | | XS | wt% | 25.3 | 24.4 | 25.8 | 24.0 | 23.7 | 25.5 | 24.5 |
| | | XSIV | dl/g | 7.1 | 7.3 | 7.2 | 6.5 | 8.2 | 8.2 | 9.4 |
| | XI | Mw | *10⁻⁴ | 12.6 | 15.3 | 26.5 | 35.4 | 24.2 | 21.3 | 18.1 |
| | | Mw/Mn | | 11 | 13 | 20 | 14 | 15 | 14 | 14 |
| | Tensile Elongation | | % | 590 | 560 | 500 | 460 | 61 | 49 | 48 |
| | Tensile Strength | | MPa | 22.4 | 21.7 | 20.8 | 18.5 | 18.7 | 19.4 | 18.7 |
| | Flexural Modulus | | MPa | 1030 | 1000 | 950 | 770 | 1080 | 1110 | 1030 |
| | IZOD Impact Strength at 23°C | | kJ/m² | 17.2 | 17.5 | 34.0 | 67.3 | 29.5 | 14.0 | 14.0 |
| | IZOD Impact Strength at -20°C | | kJ/m² | 4.6 | 5.1 | 5.9 | 8.7 | 7.8 | 6.6 | 6.8 |

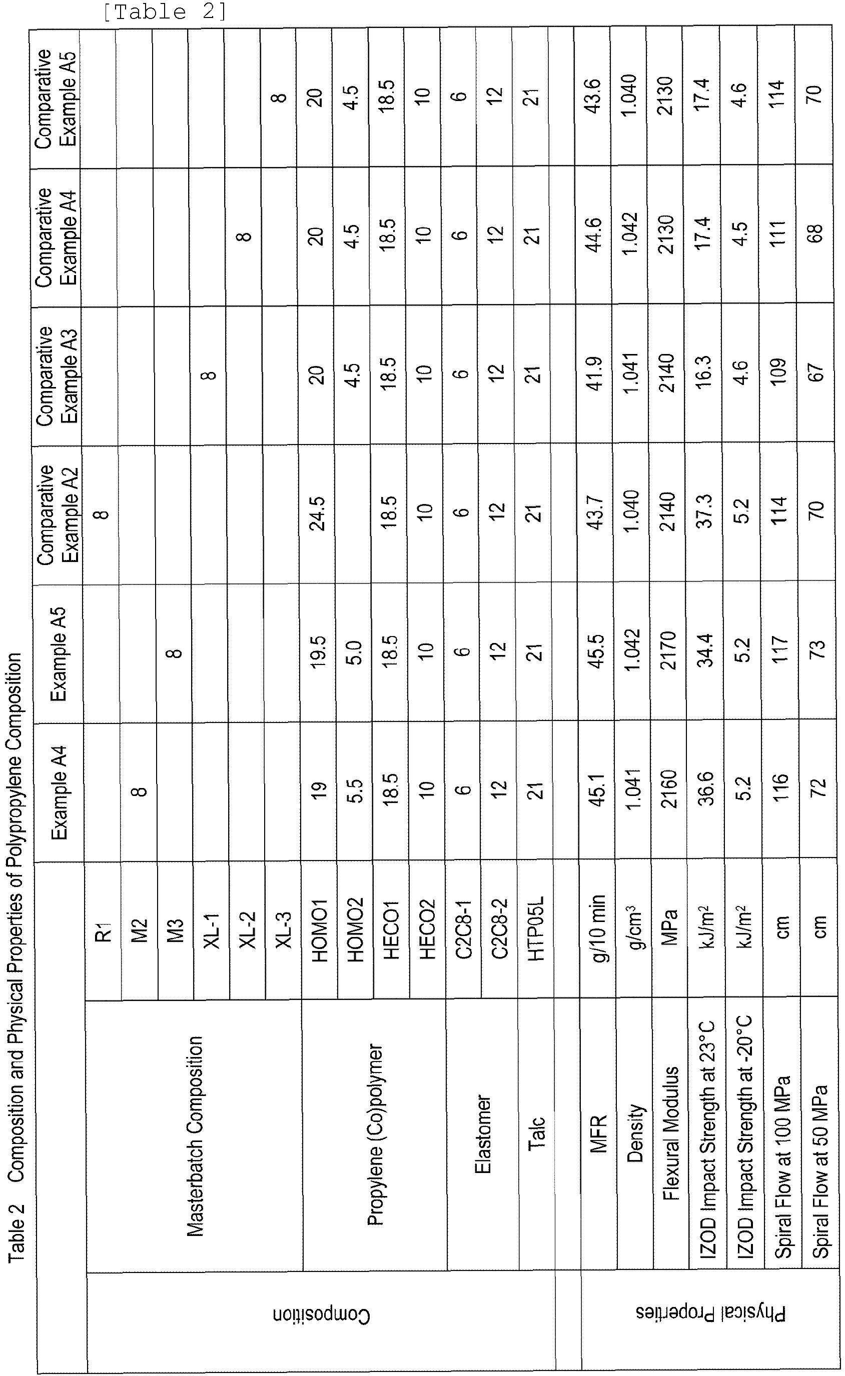

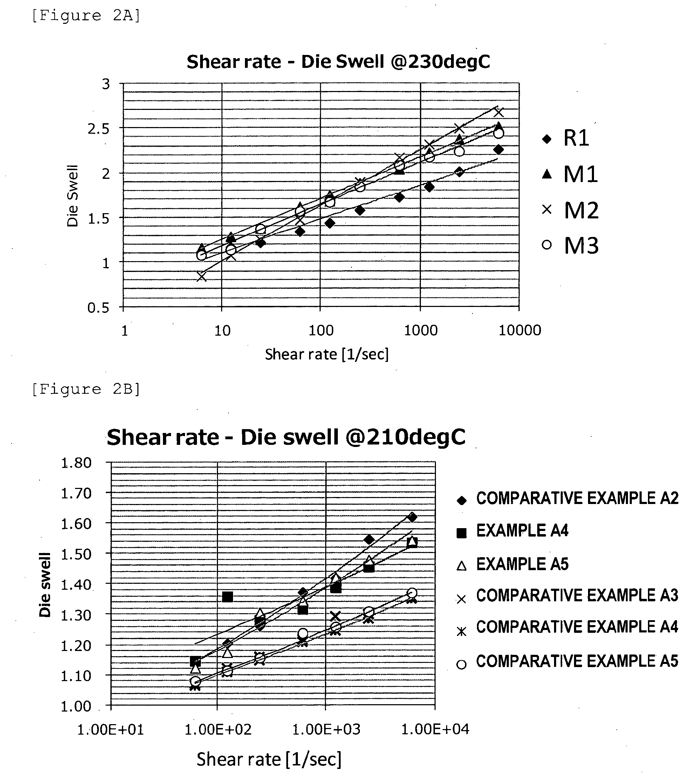

The results are shown in Tables 1 and 2. It is clear that the masterbatch compositions of the present invention provide polypropylene resin compositions having excellent mechanical properties and fluidity. Further, Figures 2(A) and 2(B) show the results of measuring die swell of masterbatch compositions and polypropylene resin compositions. It is clear that the masterbatch compositions of the present invention and the polypropylene resin compositions containing them exhibit increased die swell. When die swell is large, defects of surface appearance are unlikely to form during molding. Although the polypropylene resin composition of Comparative Example A2 had large die swell, it did not have a sufficient level of fluidity, because the MFR and the weight average molecular weight of xylene insolubles of masterbatch composition R1 used fell outside the ranges of the present invention. It is therefore clear that the masterbatch compositions of the present invention provide polypropylene resin compositions having excellent mechanical properties, fluidity, and surface appearance.

### 3. Production of masterbatch compositions (No. 2)

### [Example B1] Production of masterbatch composition M4

Masterbatch composition M4 was produced similarly to M1, except that the hydrogen concentration in the first-stage reactor was changed to 0.81 mol%, the hydrogen concentration and C2/(C2 + C3) in the second-stage reactor were changed to 200 molar ppm and 0.23 by molar ratio, respectively, and the residence time distribution in the first and second stages was adjusted such that the amount of the copolymer component became 32 wt%.

Various specimens were injection-molded from the powder of masterbatch composition M4 as in Example A1 and evaluated.

### [Example B2] Production of masterbatch composition M5

Masterbatch composition M5 was produced similarly to M4, except that the hydrogen concentration in the first-stage reactor was changed to 0.90 mol%, C2/(C2 + C3) in the second-stage reactor was changed to 0.25 by molar ratio, and the residence time distribution in the first and second stages was adjusted such that the amount of the copolymer component became 30 wt%.

### [Example B3] Production of masterbatch composition M6

Masterbatch composition M6 was produced similarly to M5, except that the hydrogen concentration and C2/(C2 + C3) in the second-stage reactor were changed to 150 molar ppm and 0.26 by molar ratio, respectively.

### [Example B4] Production of masterbatch composition M7

Masterbatch composition M7 was produced similarly to M5, except that the hydrogen concentration in the second-stage reactor was changed to 150 molar ppm.

### [Example B5] Production of masterbatch composition M8

Masterbatch composition M8 was produced similarly to M5, except that the hydrogen concentration in the second-stage reactor was changed to 100 molar ppm.

### [Comparative Example B1] Production of masterbatch composition R1'

A solid catalyst containing Ti and diisobutyl phthalate as an internal donor supported on MgCl₂ was prepared using the method described in Example 5 of EP Patent No. 728769. Next, the above-described solid catalyst, triethylaluminum (TEAL) as an organoaluminum compound, and dicyclopentyl-dimethoxysilane (DCPMS) as an external electron donor compound were used and contacted at 12°C for 24 minutes, in amounts such that the ratio by weight of TEAL to the solid catalyst became 20, and the TEAL/DCPMS ratio by weight became 10. Pre-polymerization was performed by maintaining the resulting catalyst system in liquid propylene in a suspended state at 20°C for 5 minutes. The resulting pre-polymer was introduced into a first-stage polymerization reactor of a polymerization apparatus including two stages of serial polymerization reactors to produce a propylene homopolymer, which was purged of unreacted monomers, and thereafter, the resulting polymer was introduced into a second-stage polymerization reactor to produce an ethylene-propylene copolymer. During polymerization, the temperature and pressure were adjusted, and hydrogen was used as a molecular weight regulator.

The polymerization temperature and the ratio of the reactants were as follows: in the first-stage reactor, the polymerization temperature was 70°C, and the hydrogen concentration was 1.70 mol%; in the second-stage reactor, the polymerization temperature was 80°C, the hydrogen concentration was 100 molar ppm, and C2/(C2 + C3) was 0.25 by molar ratio. Further, the residence time distribution in the first and second stages was adjusted such that the amount of the copolymer component became 30 wt%. Using this polypropylene polymer, masterbatch composition R1' in the form of pellets was obtained similarly to M1.

### [Comparative Example B2] Production of masterbatch composition R2

Masterbatch composition R2 was produced similarly to M1, except that the hydrogen concentration in the first-stage reactor was changed to 0.81 mol%, the hydrogen concentration and C2/(C2 + C3) in the second-stage reactor were changed to 300 molar ppm and 0.24 by molar ratio, respectively, and the residence time distribution in the first and second stages was adjusted such that the amount of the copolymer component became 31 wt%.

### 4. Production of polypropylene resin compositions (No. 2)

### [6] Block polypropylene HECO3

Block polypropylene composed of a polypropylene homopolymer and an ethylene-propylene copolymer having the following characteristics was used.
The polypropylene homopolymer: MFR = 250 g/10 minutes; content of xylene solubles at 25°C = 2.0 wt%
The block polypropylene: MFR = 98 g/10 minutes; intrinsic viscosity of xylene solubles at 25°C = 2.0 dl/g
The proportion of the ethylene-propylene copolymer contained in the block polypropylene = 22.5 wt%
The proportion of ethylene units contained in the ethylene-propylene copolymer = 34.5 wt%

### [Example B6] Production of a polypropylene resin composition

Masterbatch composition M2 obtained in Example A2, HECOs 1 to 3, an elastomer (C2C8-2), and talc (HTP05L from IMI Fabi, LLC) were blended according to the composition shown in Table 4, and the mixture was further blended with the same amounts of additives as those in Example A4 based on a total amount of 100 parts by weight of the resin. Specimens were molded from the blend of these components as in Example A4 and evaluated.

### [Examples B7 to B11] Production of polypropylene resin compositions

The components were blended according to the compositions shown in Table 4, and specimens were molded as in Example B6 and evaluated.

### [Comparative Examples B3, B4, and B5] Production of comparative polypropylene resin compositions

The components were blended according to the compositions shown in Table 4, and specimens were molded as in Example B6 and evaluated.

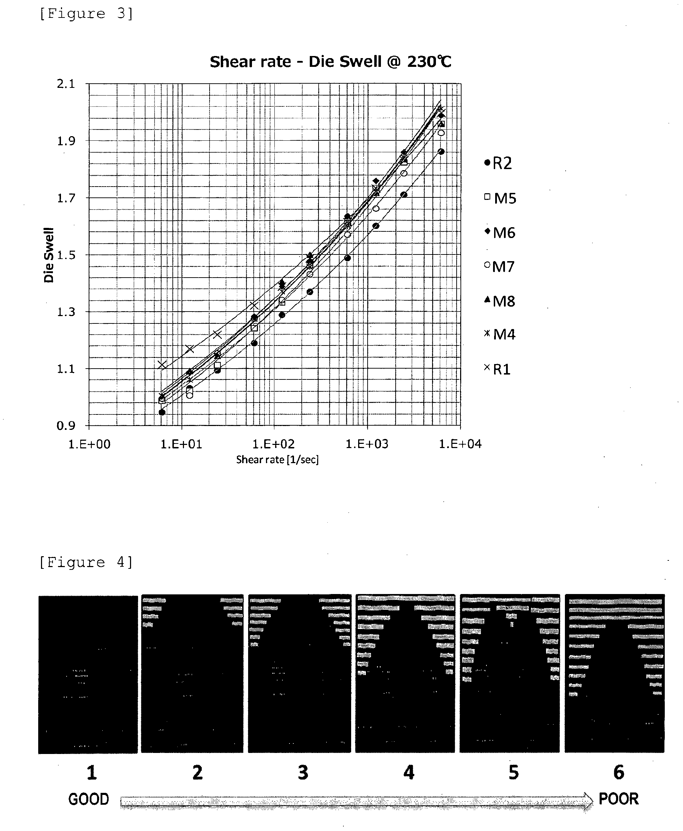

The results are shown in Tables 3 and 4. It is clear that the masterbatch compositions of the present invention provide polypropylene resin compositions having excellent mechanical properties and surface appearance. As shown in Figure 3, the masterbatch compositions of the present invention exhibit increased die swell, and from the relation with Figures 2(A) and 2(B), polypropylene resin compositions containing the masterbatch compositions of the present invention are also expected to exhibit increased die swell, and hence, molded articles therefrom have good surface appearance. Although comparative masterbatch composition R1 exhibits increased die swell, R1 is inferior in fluidity as described above. Poor fluidity causes the contact of the resin to the mold to deteriorate, leading to poor surface appearance of the polypropylene resin composition containing R1.

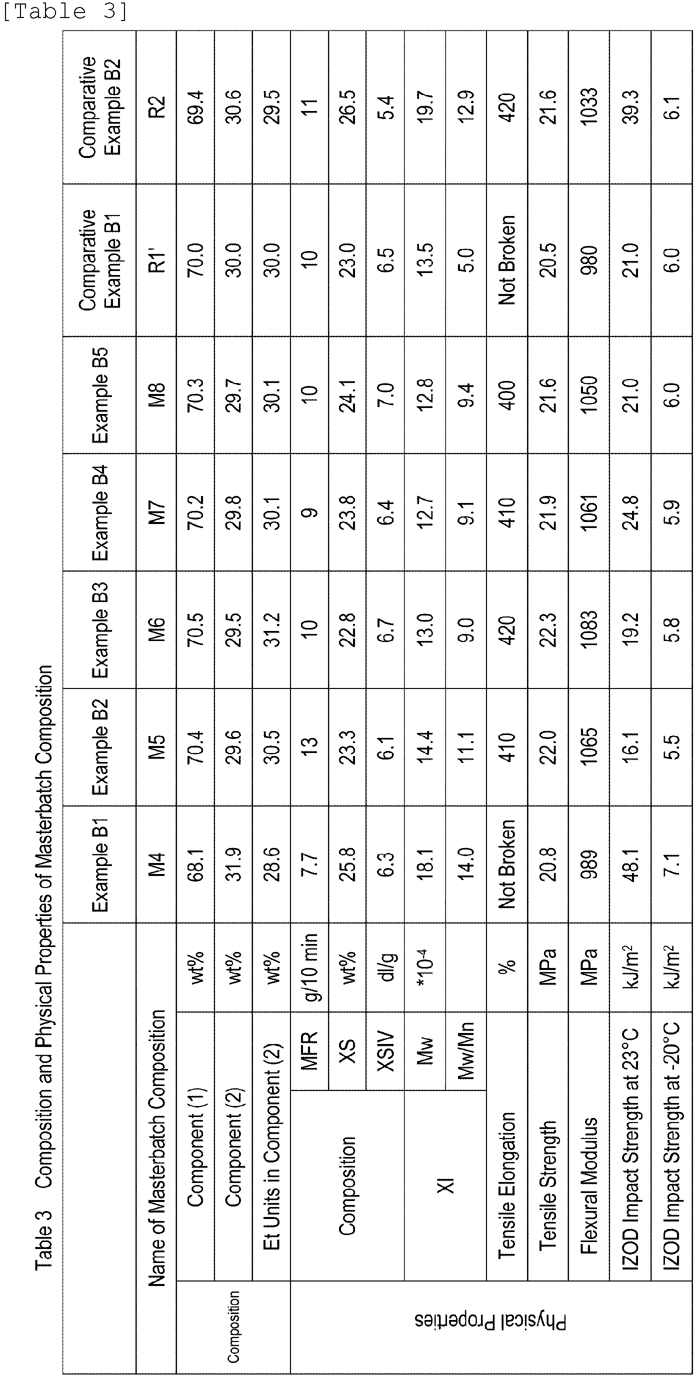

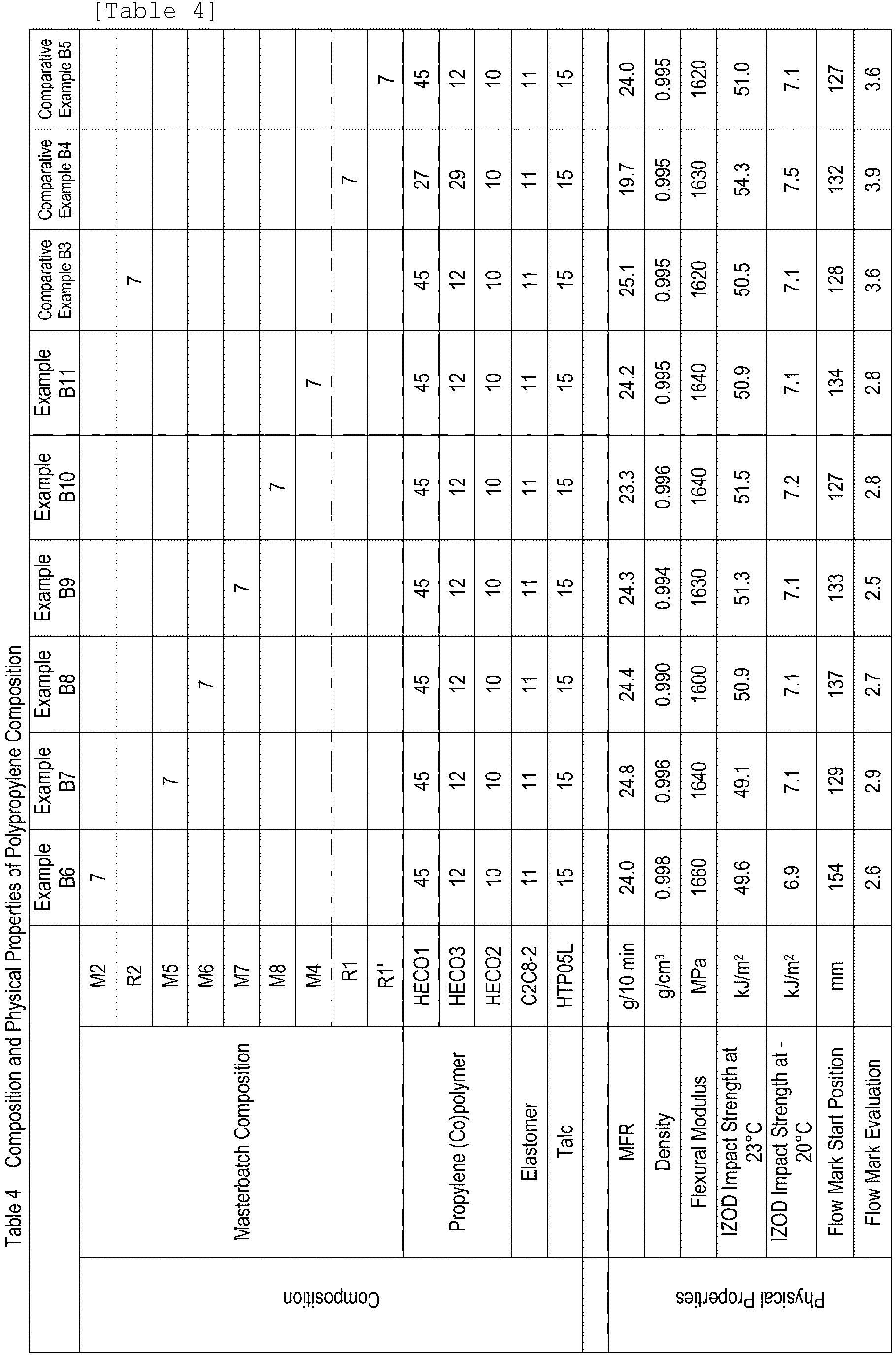

### 5. Production of polypropylene resin compositions (No. 3)

### [7] Block polypropylene HECO4

Block polypropylene composed of a polypropylene homopolymer and an ethylene-propylene copolymer having the following characteristics was used.

The polypropylene homopolymer: MFR = 56 g/10 minutes; content of xylene solubles at 25°C = 1.5 wt%

The block polypropylene: MFR = 29.0 g/10 minutes; intrinsic viscosity of xylene solubles at 25°C = 1.8 dl/g

The proportion of the ethylene-propylene copolymer contained in the block polypropylene = 26.0 wt%

The proportion of ethylene units contained in the ethylene-propylene copolymer = 46 wt%

[Examples C1 to C3] Production of polypropylene resin compositions

Dry blends of HECO4 and masterbatch composition M3 at the weight ratios shown in Table 5 were melt-kneaded in the extruder (cylinder) of an injection molding machine to produce polypropylene resin compositions, and the polypropylene resin compositions were evaluated. As shown in Table 5, molded articles from these resin compositions had surface appearances better than that obtained in Comparative Example C1 not containing masterbatch composition M3.

**[Table 5]**

| Table 5 Composition and Physical Properties of Polypropylene Composition | | | | | | |
|---|---|---|---|---|---|---|
| | | | Example C1 | Example C2 | Example C3 | Comparativ e Example C1 |
| Compositio n | Propylene (Co)polymer | HECO4 | 95 | 90 | 85 | 100 |
| | Masterbatch Composition | M3 | 5 | 10 | 15 | |
| Physical Properties | MFR | g/10 min | 27.0 | 25.2 | 23.5 | 29.0 |
| | Tensile Elongation | % | 170 | 210 | 120 | 210 |
| | Tensile Strength | MPa | 20.3 | 20.2 | 20.2 | 20.2 |
| | Flexural Modulus | MPa | 1150 | 1130 | 1130 | 1160 |
| | IZOD Impact Strength at 23°C | kJ/m² | 41.2 | 41.9 | 41.4 | 39.8 |
| | IZOD Impact Strength at 10°C | kJ/m² | 27.4 | 33.4 | 33.5 | 16.9 |
| | Flow Mark Start Position | mm | 202 | 220 | 253 | 95 |
| | Flow Mark Evaluation | | 1.4 | 1.2 | 1.0 | 4.3 |

### 5. Evaluation methods

### [MFR]

MFR was measured in accordance with JIS K 7210, under the conditions of 230°C and a load of 21.18 N.

### [Ethylene concentration in copolymers]

For samples dissolved in a mixed solvent of 1,2,4-trichlorobenzene/deuterated benzene, measurements were performed by ¹³C-NMR, using JNM LA-400 (¹³C resonant frequency 100 MHz) from JEOL Ltd.

### [Density]

Density was measured in accordance with JIS K 7112.

### [Sampling of xylene solubles]

In a flask containing 250 mL of o-xylene (solvent), 2.5 g of the polymer was placed, and the mixture was stirred for 30 minutes while being purged with nitrogen at 135°C using a hot plate and a reflux device to completely dissolve the composition, and then cooled at 25°C for 1 hour. The resulting solution was filtered with filtering paper. One-hundred milliliters of the filtrate after being filtered were sampled and transferred into an aluminum cup or the like, evaporated to dryness at 140°C while being purged with nitrogen, and allowed to stand at room temperature for 30 minutes to obtain xylene solubles (XS). Next, the container was maintained at 80°C in an oven under vacuum until a certain weight was achieved, and then the weight of the polymer dissolved in xylene at room temperature was determined. The percent by weight of the polymer dissolved in xylene relative to the entire polymer was calculated, and defined as the amount of xylene solubles at 25°C.

### [XSIV]

Using the above-described xylene solubles as a sample, the intrinsic viscosity was measured in tetrahydronaphthalene at 135°C, using an Ubbelohde-type viscometer (SS-780-H1 from Shibayama Scientific Co., Ltd.).

### [Sampling of xylene insolubles]

After filtering the xylene solubles as described above, acetone was added to a residue that remained on the filtering paper (mixture of the xylene insoluble component and the solvent), the mixture was filtered, and then the unfiltered component was evaporated to dryness in a vacuum drying oven set at 80°C to obtain xylene insolubles (XI).

### [Mw and Mw/Mn of xylene insolubles]

Using the above-described xylene insolubles as a sample, the weight average molecular weight (Mw) and the molecular weight distribution (Mw/Mn) were measured as described below.

PL GPC220 from Polymer Laboratories Ltd. was used as the apparatus, 1,2,4-trichlorobenzene containing an antioxidant was used as the mobile phase, serially connected UT-G (one), UT-807 (one), and UT-806M (two) from Showa Denko K.K. were used as the columns, and a differential refractometer was used as the detector. As the solvent of a sample solution of the xylene insolubles, the same solvent as that of the mobile phase was used, and the sample for measurement was prepared by dissolving the xylene insolubles at a sample concentration of 1 mg/mL for 2 hours, with shaking at a temperature of 150°C. Five-hundred microliters of the sample solution thus obtained were injected into the columns, and measurement was performed at a flow rate of 1.0 mL/minute, a temperature of 145°C, and a data capture interval of 1 second. Column calibration was performed by the third-order approximation, using polystyrene standard samples having molecular weights of 5800000 to 7450000 (shodex STANDARD from Showa Denko K.K.). As the Mark-Houwink coefficients, K = 1.21 × 10⁻⁴ and α = 0.707 were used for the polystyrene standard samples, and K = 1.37 × 10⁻⁴ and α = 0.75 were used for the polypropylene-based polymers.

### [Tensile properties]

A tensile test was performed at room temperature (23°C) in accordance with JIS K6921-2. Tensile strength and elongation were measured at a tension speed of 50 mm/minute.

### [Flexural modulus]

A bending test was performed at room temperature (23°C) in accordance with JIS K6921-2. Measurement was performed at a crosshead speed of 2 mm/minute.

### [IZOD impact strength]

IZOD impact strength was measured under temperature conditions of 23°C and -20°C, in accordance with JIS K7110.

### [Flow mark]

Evaluation of a flow mark was performed based on a flow mark start position and visual observation of a molded article.
(1) Evaluation based on the flow mark start position Using an injection molding machine equipped with a shaping mold having a film gate ("EC160N2" from Toshiba Machine Co., Ltd.), a flat plaque (140 mm × 300 mm × 3 mm) was injection-molded under the conditions of a cylinder temperature of 210°C, a mold temperature of 40°C, an injection time of 15 seconds, and a cooling time of 25 seconds. The surface appearance of the molded article thus obtained was visually observed, and the distance (mm) from the gate position to the position where a tiger mark started to form was measured. The longer the distance is, the better the surface appearance of the molded article.
(2) Evaluation based on visual observation

Using the same flat plaque as in (1) above, the surface appearance was evaluated according to six grades, using the evaluation criteria shown in Figure 4.

### [Die swell]

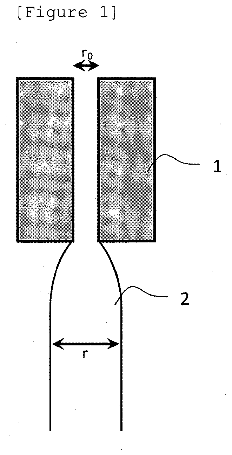

Using a capillary rheometer (Capilograph 1C from Toyo Seiki Seisaku-Sho, Ltd.), a molten resin 2 was extruded from a capillary 1, and die swell was determined from the ratio of diameter r of the molten resin extruded as shown in Figure 1 to capillary size r₀, i.e., R = (r/r₀). Capillary length: 10 mm; capillary size: 1.0 mm; inlet angle: 90° ; set temperature: 230°C for the masterbatch compositions shown in Figure 2(A) and Figure 3, and 210°C for the polypropylene resin compositions shown in Figure 2(B).

### [Molding fluidity]

Molding fluidity was evaluated based on the spiral flow length.

The spiral flow length was measured using an injection molding machine (J110AD from the Japan Steel Works, Ltd.) equipped with a spiral flow mold (flow path cross section: a trapezoid having an upper side of 8 mm, a lower side of 10 mm, and a height of 2 mm) in which Archimedes' spiral was formed. The molding conditions were as follows:
Cylinder temperature: 180°C
Mold temperature: 40°C
Injection pressure: 100 MPa
Injection speed: 20 mm/second
Dwell condition: 50 MPa and 100 MPa (both maintained for 10 seconds)
Cooling time: 10 seconds

### Reference Signs List

- 1: Capillary
- 2: Molten resin

## Claims

1. A masterbatch composition comprising:
a propylene (co)polymer as component (1) containing 0 to 3 wt% of ethylene or one or more C4-C10-α-olefin-derived units; and
a propylene-ethylene copolymer as component (2) comprising 25 to 35 wt% of ethylene-derived units,
and
wherein the masterbatch composition satisfies the following requirements:
1) the composition has a melt flow rate (230°C, load: 21.18 N) of 5 to 30 g/10 minutes;
2) xylene insolubles of the composition have an Mw of 10 × 10⁴ to 30 × 10⁴ and an Mw/Mn of 6 to 20 as measured by GPC; and
3) xylene solubles of the composition have an intrinsic viscosity of 5.5 to 9.0 dl/g;
Wherein the masterbatch composition comprises 67 to 75 wt% of component (1) and 25 to 33 wt% of component (2).

2. The masterbatch composition according to claim 1, wherein the melt flow rate is 5 to 15 g/10 minutes.

3. The masterbatch composition according to claim 1 or 2, wherein the xylene insolubles have an Mw/Mn of 7 to 20, preferably 8 to 20, more preferably 9 to 20.

4. The masterbatch composition according to any of claims 1 to 3, wherein a content of the ethylene-derived units in the propylene-ethylene copolymer as component (2) is 27 to 33 wt%.

5. The masterbatch composition according to any of claims 1 to 4, wherein the xylene solubles have an intrinsic viscosity of 6.0 to 8.0 dl/g.

6. The masterbatch composition according to any of claims 1 to 5 obtained by polymerizing propylene and ethylene using a catalyst comprising:
(A) a solid catalyst containing, as essential components, magnesium, titanium, halogen, and an electron donor compound selected from succinate-based compounds;
(B) an organoaluminum compound; and
(C) an external electron donor compound.

7. A polypropylene resin composition obtained by mixing the masterbatch composition according to any of claims 1 to 6 with block polypropylene different from the masterbatch composition, the block polypropylene containing 5 wt% or more of ethylene.

8. An injection-molded article obtained by injection-molding the polypropylene resin composition according to claim 7.

## Patentansprüche

1. Masterbatchzusammensetzung, umfassend:
ein Propylen(co)polymer als Komponente (1), das 0 bis 3 Gew.% Ethylen oder ein oder mehrere von C₄- bis C₁₀-α-Olefin abgeleitete Einheiten enthält; und
ein Propylen-Ethylen-Copolymer als Komponente (2), das 25 bis 35 Gew.% von Ethylen abgeleitete Einheiten umfasst, und
wobei die Masterbatchzusammensetzung die folgenden Anforderungen erfüllt:
1) die Zusammensetzung hat eine Schmelzflussrate (230 °C, Last: 21,18 N) von 5 bis 30 g/10 Minuten;
2) die in Xylol unlöslichen Bestandteile der Zusammensetzung haben ein Mw von 10 × 10⁴ bis 30 × 10⁴ und ein Mw/Mn von 6 bis 20, gemessen mittels GPC; und
3) die in Xylol löslichen Bestandteile der Zusammensetzungen haben eine Grenzviskosität von 5,5 bis 9,0 dl/g;
wobei die Masterbatchzusammensetzung 67 bis 75 Gew.% von Komponente (1) und 25 bis 33 Gew.% von Komponente (2) umfasst.

2. Masterbatchzusammensetzung nach Anspruch 1, wobei die Schmelzflussrate 5 bis 15 g/10 Minuten beträgt.

3. Masterbatchzusammensetzung nach Anspruch 1 oder 2, wobei die in Xylol unlöslichen Bestandteile ein Mw/Mn von 7 bis 20, vorzugsweise 8 bis 20, bevorzugter 9 bis 20 haben.

4. Masterbatchzusammensetzung nach einem der Ansprüche 1 bis 3, wobei ein Gehalt der von Ethylen abgeleiteten Einheiten in dem Propylen-Ethylen-Copolymer als Komponente (2) 27 bis 33 Gew.% beträgt.

5. Masterbatchzusammensetzung nach einem der Ansprüche 1 bis 4, wobei die in Xylol löslichen Bestandteile eine Grenzviskosität von 6,0 bis 8,0 dl/g haben.

6. Masterbatchzusammensetzung nach einem der Ansprüche 1 bis 5, die durch Polymerisieren von Propylen und Ethylen unter Verwendung eines Katalysators erhalten wird, der folgendes umfasst:
(A) einen festen Katalysator, der als wesentliche Komponenten Magnesium, Titan, Halogen und eine Elektronendonorverbindung ausgewählt aus Verbindungen auf Succinatbasis enthält;
(B) eine Organoaluminiumverbindung und
(C) eine externen Elektronendonorverbindung.

7. Polypropylenharzzusammensetzung, die durch Mischen der Masterbatchzusammensetzung gemäß einem der Ansprüche 1 bis 6 mit Blockpolypropylen erhalten wird, das sich von der Masterbatchzusammensetzung unterscheidet, wobei das Blockpolypropylen 5 Gew.% oder mehr Ethylen enthält.

8. Spritzgießartikel, der durch Spritzgießen der Polypropylenharzzusammensetzung gemäß Anspruch 7 erhalten wird.

## Revendications

1. Composition de mélange maître comprenant :
un (co)polymère de propylène en tant que constituant (1) contenant 0 à 3 % en poids d'éthylène ou un ou plusieurs motifs dérivés d'a-oléfines en C4-C10 ; et
un copolymère de propylène-éthylène en tant que constituant (2) comprenant 25 à 35 % en poids de motifs dérivés de l'éthylène et
la composition de mélange maître satisfaisant aux exigences suivantes :
1) la composition présente un indice de fluidité à chaud (230°C, charge : 21,18 N) de 5 à 30 g/10 minutes ;
2) les insolubles dans le xylène de la composition présentent un Mw de 10 × 10⁴ à 30 × 10⁴ et un rapport Mw/Mn de 6 à 20, tels que mesurés par GPC ; et
3) les solubles dans le xylène de la composition présentent une viscosité intrinsèque de 5,5 à 9,0 dl/g,
la composition de mélange maître comprenant 67 à 75 % en poids de constituant (1) et 25 à 33 % en poids de constituant (2).

2. Composition de mélange maître selon la revendication 1, l'indice de fluidité à chaud étant de 5 à 15 g/10 minutes.

3. Composition de mélange maître selon la revendication 1 ou 2, les insolubles dans le xylène présentant un rapport Mw/Mn de 7 à 20, de préférence de 8 à 20, plus préférablement de 9 à 20.

4. Composition de mélange maître selon l'une quelconque des revendications 1 à 3, une teneur en motifs dérivés de l'éthylène dans le copolymère de propylène-éthylène en tant que constituant (2) étant de 27 à 33 % en poids.

5. Composition de mélange maître selon l'une quelconque des revendications 1 à 4, les solubles dans le xylène présentant une viscosité intrinsèque de 6,0 à 8,0 dl/g.

6. Composition de mélange maître selon l'une quelconque des revendications 1 à 5, obtenue par polymérisation de propylène et d'éthylène à l'aide d'un catalyseur comprenant
(A) un catalyseur solide contenant, en tant que constituants essentiels, du magnésium, du titane, un halogène et un composé donneur d'électrons choisi parmi des composés à base de succinate ;
(B) un composé d'organoaluminium ; et
(C) un composé donneur d'électrons externe.

7. Composition de résine de polypropylène obtenue par mélange de la composition de mélange maître selon l'une quelconque des revendications 1 à 6 avec du polypropylène séquencé différent de celui de la composition de mélange maître, le polypropylène séquencé contenant 5 % en poids ou plus d'éthylène.

8. Article moulé par injection obtenu par moulage par injection de la composition de résine de polypropylène selon la revendication 7.
